# EUROPÄISCHE PATENTSCHRIFT

(11) **EP 4 623 480 B1**
(45) Veröffentlichungstag und Bekanntmachung des Hinweises auf die Patenterteilung: **11.02.2026**
(21) Anmeldenummer: 24833261.1
(22) Anmeldetag: 13.12.2024
(51) Int. Cl.: H01M 50/227, H01M 50/249, B29C 33/42, B29C 45/14, H01M 50/242, H01M 50/278, H01M 50/229, B60L 50/64

(54) **BATTERIEGEHÄUSEKOMPONENTE, VERFAHREN ZUM HERSTELLEN EINER BATTERIEGEHÄUSEKOMPONENTE**
BATTERY HOUSING COMPONENT, METHOD OF MANUFACTURING A BATTERY HOUSING COMPONENT
COMPOSANT DE BOÎTIER DE BATTERIE, PROCÉDÉ DE FABRICATION D'UN COMPOSANT DE BOÎTIER DE BATTERIE

(30) Priorität: 31.01.2024 DE 202024102787 U
(43) Veröffentlichungstag der Anmeldung: 01.10.2025
(73) Patentinhaber: Kautex Textron GmbH & Co. KG, 53229 Bonn (DE)
(72) Erfinder: SEINSCHE, Philipp, 53229 Bonn (DE); LENZ, Stefan, 51469 Bergisch Gladbach (DE); HÜTZEN, Markus, 53757 Sankt Augustin (DE)
(74) Vertreter: Richly & Ritschel Patentanwälte PartG mbB
(86) Internationale Anmeldenummer: PCT/EP2024/086285
(87) Internationale Veröffentlichungsnummer: WO 2025/162640

(56) Entgegenhaltungen:
- CN-U- 218 569 089
- DE-A1- 102017 010 863
- US-A1- 2013 252 059
- US-B2- 10 593 915

## Beschreibung

Die vorliegende Erfindung betrifft eine Batteriegehäusekomponente für eine Traktionsbatterie und Verfahren zu deren Herstellung. Ferner betrifft die vorliegende Erfindung ein Batteriegehäuse zur Aufnahme von Batteriezellen und/oder Batteriemodulen, eine Traktionsbatterie für ein Kraftfahrzeug und ein Kraftfahrzeug mit einer Traktionsbatterie.

Für Batteriegehäusekomponenten für Traktionsbatterien bestehen hohe Anforderungen an deren mechanische Stabilität und an deren Feuerfestigkeit. Batteriegehäusekomponenten, insbesondere Batteriegehäusekomponenten, die in Einbauposition in einer Traktionsbatterie im Bodenbereich eines Traktionsbatteriegehäuses bzw. einer Traktionsbatterie verbaut sind, dienen in der Regel auch dem Schutz vor äußeren mechanischen Einflüssen, wie diese beispielsweise bei Überfahren eines Hindernisses und Kollision dieses Hindernisses mit der Batteriegehäusekomponente auftreten. Entsprechende Batteriegehäusekomponenten können folglich als Unterbodenschutz oder als Batteriegehäuseschale mit Stoßschutz ausgebildet sein.

Die innerhalb eines Traktionsbatteriegehäuses angeordneten Batteriezellen oder Batteriemodule geraten ab einer bestimmten Temperatur in einen irreversiblen chemischen Prozess der Zersetzung, bei dem in kurzer Zeit eine große Menge der gespeicherten Energie durch Oxidation freigesetzt wird. Eine zunächst geschlossene Batteriezelle baut dabei Druck auf und platzt an einer vorgegebenen Stelle, an welcher ein heißer Gasstrahl mit einer hohen Geschwindigkeit austritt. Dieser Gasstrahl belastet die Oberfläche einer Batteriegehäusekomponente, beispielsweise eines Batteriegehäuses beim Auftreffen auf die Batteriegehäusekomponente sowohl thermisch als auch abrasiv durch im Gasstrahl mitfliegende Partikel.

Bei einem Feuer außerhalb eines Traktionsbatteriegehäuses bzw. einer Traktionsbatterie müssen die in dem Traktionsbatteriegehäuse angeordneten Batteriezellen oder Batteriemodule vor Hitzeeintrag in das Aufnahmevolumen des Traktionsbatteriegehäuses geschützt werden. Ferner muss die mechanische Integrität der Batteriegehäusekomponente für eine möglichst lange Zeit gewährleistet bleiben.

Zur Gewährleistung der Sicherheit der Traktionsbatterie ist ein thermisch und mechanisch widerstandsfähiges Batteriegehäuse von großer Bedeutung.

Aus Kunststoff gebildete Batteriegehäusekomponenten, insbesondere faserverstärkte Kunststoffe aufweisende Batteriegehäusekomponenten weisen hervorragende mechanische Stabilität und eine gute thermische Isolationswirkung auf. Jedoch kann deren Aufbau recht komplex ausfallen, so dass die Herstellung einer entsprechenden Batteriegehäusekomponente komplex sein kann.

Der Erfindung liegt die Aufgabe zugrunde, eine verbesserte Batteriegehäusekomponente bereitzustellen, die bei thermischer und mechanischer Belastung eine erhöhte Stabilität aufweist und einen vereinfachten Aufbau aufweist.

Die der vorliegenden Erfindung zugrundeliegende Aufgabe wird durch eine Batteriegehäusekomponente mit den Merkmalen des Anspruchs 1 gelöst. Vorteilhafte Ausgestaltungen der Batteriegehäusekomponente sind in den von Anspruch 1 abhängigen Ansprüchen beschrieben.

Im Genaueren wird die der vorliegenden Erfindung zugrundeliegende Aufgabe durch eine Batteriegehäusekomponente für eine Traktionsbatterie gelöst, wobei die Batteriegehäusekomponente ein Basisbauteil, welches einen ersten Kunststoff aufweist, und zumindest ein einstückig ausgebildetes Schutzelement aufweist, welches einen zweiten Kunststoff aufweist. Das Schutzelement weist zumindest zwei Längsausnehmungen auf, wobei ein erster Bereich des Schutzelements, der zwischen den zumindest zwei Längsausnehmungen angeordnet ist, bezüglich zumindest eines zweiten Bereichs derart höhenversetzt ist, dass der erste Bereich des Schutzelements einen Teil einer Außenseite der Batteriegehäusekomponente und der zweite Bereich des Schutzelements einen Teil einer Innenseite der Batteriegehäusekomponente bildet. Das Schutzelement ist mit dem Basisbauteil derart verbunden, dass zumindest eine Längsausnehmung des Schutzelements durch das Basisbauteil verschlossen ist.

Die entsprechend ausgebildete Batteriegehäusekomponente weist den Vorteil auf, dass diese aufgrund einer Quasi-Sandwichbauweise eine erhöhte Stabilität aufweist. Unter der Quasi-Sandwichbauweise ist erfindungsgemäß zu verstehen, dass der zumindest eine erste Bereich des Schutzelements und die diesen ersten Bereich einfassenden zweiten Bereiche des Schutzelements unterschiedliche Höhenniveaus aufweisen. Dabei sind der erste Bereich und die diesen einfassenden zweiten Bereiche des Schutzelements Teil des einstückig ausgebildeten Schutzelements, und der erste Bereich steht mittels des Basisbauteils mit den diesen einfassenden zweiten Bereichen in Kontakt und ist vorzugsweise mittels des Basisbauteils mit den zweiten Bereichen verbunden. Denn das Basisbauteil verschließt die zumindest eine Längsausnehmung des Schutzelements.

Gleichzeitig weist die erfindungsgemäße Batteriegehäusekomponente einen einfachen Aufbau auf und kann werkzeugfallend hergestellt werden. Unter einer werkzeugfallenden Herstellung ist erfindungsgemäß zu verstehen, dass die Batteriegehäusekomponente nach deren Herstellung mittels eines Werkzeugs keine weiteren Produktionsschritte zu deren Fertigstellung benötigt.

Das Basisbauteil kann auch als Trägerbauteil bezeichnet werden. Das Basisbauteil ist vorzugsweise einstückig ausgebildet. Weiter vorzugsweise ist das Basisbauteil monolithisch ausgebildet. Der erste Kunststoff ist vorzugsweise ein thermoplastischer Kunststoff. Der erste Kunststoff weist vorzugsweise Polyamid (PA) und/oder Polypropylen (PP) und/oder Polypropylenterephthalat (PPT) auf.

Das Schutzelement kann auch als Verstärkungselement bezeichnet werden. Das Schutzelement ist vorzugsweise einstückig ausgebildet. Weiter vorzugsweise ist das Schutzelement monolithisch ausgebildet. Der zweite Kunststoff ist vorzugsweise ein thermoplastischer Kunststoff. Der zweite Kunststoff weist vorzugsweise Polyamid (PA) und/oder Polypropylen (PP) und/oder Polypropylenterephthalat (PPT) auf.

Der zweite Kunststoff kann auch einen duroplastischen Kunststoff aufweisen oder aus einem duroplastischen Kunststoff gebildet sein.

Der erste Kunststoff und der zweite Kunststoff sind vorzugsweise derart ausgewählt, dass diese schweißkompatibel miteinander sind. Folglich sind der erste Kunststoff und der zweite Kunststoff vorzugsweise miteinander verschweißbar.

Der zweite Bereich bzw. die zweiten Bereiche des Schutzelements ist/sind dem ersten Bereich des Schutzelements direkt benachbart und ist/sind lediglich durch die Längsausnehmung von diesem getrennt.

In Draufsicht auf das Schutzelement, d.h. in einer Blickrichtung parallel zum Normalenvektor des zweiten Bereichs, ist das Schutzelement vorzugsweise durchgehend ausgebildet. Folglich bedecken der erste Bereich und die zweiten Bereiche die Projektionsfläche des Schutzelements komplett.

Vorzugsweise ist das Schutzelement mit dem Basisbauteil derart verbunden, dass alle Längsausnehmungen des Schutzelements durch das Basisbauteil verschlossen sind.

Das Schutzelement wird vorzugsweise dadurch erzeugt, dass in ein eben bzw. flach ausgebildetes Bauteil zumindest zwei Längsausnehmungen eingebracht bzw. eingeschnitten werden. Dabei verlaufen die Längsausnehmungen vorzugsweise nicht von einem Ende des Bauteils zum gegenüberliegenden Ende. Mit anderen Worten beginnen und enden die Längsausnehmungen in dem flächigen Bauteil. Somit ist auch gewährleistet, dass das Schutzelement einstückig ausgebildet ist. Nach Einbringen der zumindest zwei Längsausnehmungen wird der Bereich zwischen den zwei Längsausnehmungen gegenüber den direkt benachbarten zweiten Bereichen heruntergedrückt, so dass der erste Bereich des Schutzelements bezüglich des zweiten bzw. der zweiten Bereiche, die den ersten Bereich einfassen, höhenversetzt ist.

Vorzugsweise ist die Batteriegehäusekomponente derart ausgebildet, dass bei dem Schutzelement der erste Bereich von zwei zweiten Bereichen begrenzt bzw. eingefasst ist, wobei der erste Bereich bezüglich der zwei zweiten Bereiche höhenversetzt ist, so dass der erste Bereich des Schutzelements einen Teil der Außenseite der Batteriegehäusekomponente und die zwei zweiten Bereiche des Schutzelements einen Teil der Innenseite der Batteriegehäusekomponente bilden.

Weiter vorzugsweise ist die Batteriegehäusekomponente derart ausgebildet, dass das Schutzelement ein ganzzahliges Vielfaches von zwei Längsausnehmungen, also z.B**.** zwei oder vier oder sechs usw. Längsausnehmungen aufweist. Zwischen jeweils zwei direkt benachbarten Längsausnehmungen ist jeweils ein erster Bereich des Schutzelements gebildet, der von jeweils zwei zweiten Bereichen begrenzt bzw. eingefasst ist, wobei jeder der ersten Bereiche bezüglich der zwei zweiten Bereiche höhenversetzt ist, so dass die jeweiligen ersten Bereiche des Schutzelements einen Teil der Außenseite der Batteriegehäusekomponente und die zweiten Bereiche des Schutzelements einen Teil der Innenseite der Batteriegehäusekomponente bilden.

Vorzugsweise ist die Batteriegehäusekomponente derart ausgebildet, dass die Batteriegehäusekomponente einen randseitig angeordneten Verbindungsflansch aufweist.

Vorzugsweise ist die Batteriegehäusekomponente derart ausgebildet, dass das Basisbauteil auf einer der Innenseite der Batteriegehäusekomponente zugewandten ersten Verbindungsfläche des ersten Bereichs des Schutzelements und/oder auf einer der Außenseite der Batteriegehäusekomponente zugewandten zweiten Verbindungsfläche des zumindest einen zweiten Bereichs des Schutzelements aufliegt.

Die entsprechend ausgebildete Batteriegehäusekomponente weist eine nochmals verbesserte Steifigkeit auf.

Vorzugsweise ist die Batteriegehäusekomponente derart ausgebildet, dass das Basisbauteil mit der der Innenseite der Batteriegehäusekomponente zugewandten ersten Verbindungsfläche des ersten Bereichs verbunden, vorzugsweise stoffschlüssig verbunden ist. Weiter vorzugsweise ist die Batteriegehäusekomponente derart ausgebildet, dass das Basisbauteil mit der der Außenseite der Batteriegehäusekomponente zugewandten zweiten Verbindungsfläche des zumindest einen zweiten Bereichs des Schutzelements verbunden, vorzugsweise stoffschlüssig verbunden ist.

Die der vorliegenden Erfindung zugrundeliegende Aufgabe wird durch eine Batteriegehäusekomponente mit den Merkmalen des Anspruchs 3 gelöst.

Im Genaueren wird die der vorliegenden Erfindung zugrundeliegende Aufgabe durch eine Batteriegehäusekomponente für eine Traktionsbatterie gelöst, wobei die Batteriegehäusekomponente ein Basisbauteil, welches einen ersten Kunststoff aufweist, und zumindest ein einstückig ausgebildetes Schutzelement aufweist, welches einen zweiten Kunststoff aufweist. Das Schutzelement weist zumindest eine Längsausnehmung auf, wobei das Schutzelement mit dem Basisbauteil derart verbunden ist, dass die Längsausnehmung des Schutzelements durch das Basisbauteil verschlossen ist, und dass das Schutzelement einen Teil einer Innenseite oder einer Außenseite der Batteriegehäusekomponente bildet, und dass der Bereich des Basisbauteils, der die Längsausnehmung des Schutzelements versschließt, den übrigen Teil der Innenseite der Batteriegehäusekomponente bildet.

Die entsprechend ausgebildete Batteriegehäusekomponente weist den Vorteil auf, dass diese aufgrund einer Sandwichbauweise eine erhöhte Stabilität aufweist. Unter der Sandwichbauweise ist erfindungsgemäß zu verstehen, dass der das Basisbauteil zumindest abschnittsweise zwischen dem Schutzelement und der Schutzplatte angeordnet ist.

Gleichzeitig weist die erfindungsgemäße Batteriegehäusekomponente einen einfachen Aufbau auf und kann werkzeugfallend hergestellt werden. Unter einer werkzeugfallenden Herstellung ist erfindungsgemäß zu verstehen, dass die Batteriegehäusekomponente nach deren Herstellung mittels eines Werkzeugs keine weiteren Produktionsschritte zu deren Fertigstellung benötigt.

Das Basisbauteil kann auch als Trägerbauteil bezeichnet werden. Das Basisbauteil ist vorzugsweise einstückig ausgebildet. Weiter vorzugsweise ist das Basisbauteil monolithisch ausgebildet. Der erste Kunststoff ist vorzugsweise ein thermoplastischer Kunststoff. Der erste Kunststoff weist vorzugsweise Polyamid (PA) und/oder Polypropylen (PP) und/oder Polypropylenterephthalat (PPT) auf.

Die Längsausnehmung durchragt das Schutzelement. Folglich kann die Längsausnehmung auch als Längsschnitt bezeichnet werden. Vorzugsweise ist das Schutzelement in dem an die Längsausnehmung angrenzenden Bereich gebogen ausgebildet und erstreckt sich in Richtung der Außenseite der Batteriegehäusekomponente.

Das Schutzelement kann auch als Verstärkungselement bezeichnet werden. Das Schutzelement ist einstückig ausgebildet. Vorzugsweise ist das Schutzelement monolithisch ausgebildet. Der zweite Kunststoff ist vorzugsweise ein thermoplastischer Kunststoff. Der zweite Kunststoff weist vorzugsweise Polyamid (PA) und/oder Polypropylen (PP) und/oder Polypropylenterephthalat (PPT) auf.

Der zweite Kunststoff kann auch einen duroplastischen Kunststoff aufweisen oder aus einem duroplastischen Kunststoff gebildet sein.

Vorzugsweise ist die Batteriegehäusekomponente derart ausgebildet, dass diese zumindest eine Schutzplatte aufweist, welche den zweiten Kunststoff aufweist und auf der Außenseite der Batteriegehäusekomponente mit dem in der Längsausnehmung angeordneten Basisbauteil verbunden ist. Die entsprechend ausgebildete Batteriegehäusekomponente weist eine nochmals verbesserte Steifigkeit auf.

Vorzugsweise ist die Batteriegehäusekomponente derart ausgebildet, dass die Innenseite der Batteriegehäusekomponente, die durch das Schutzelement gebildet ist, zumindest mittelbar mit einer Batteriezelle und/oder mit einem Batteriemodul zumindest mittelbar verbunden zu werden.

Vorzugsweise ist die Batteriegehäusekomponente derart ausgebildet, dass die Batteriegehäusekomponente einen randseitig angeordneten Verbindungsflansch aufweist.

Vorzugsweise ist die Batteriegehäusekomponente derart ausgebildet, dass das Schutzelement mit dem Basisbauteil stoffschlüssig verbunden ist.

Die entsprechend ausgebildete Batteriegehäusekomponente weist eine nochmals verbesserte mechanische Stabilität auf.

Die stoffschlüssige Verbindung des Schutzelements mit dem Basisbauteil ist vorzugsweise durch eine Verschweißung realisiert. Weiter vorzugsweise ist das Schutzelement mit dem Basisbauteil dadurch stoffschlüssig verbunden, dass das Schutzelement in einem Spritzgusswerkzeug angeordnet ist und von sich im flüssigen Zustand befindlichen ersten Kunststoff des Basisbauteil umflossen wird, so dass der erste Kunststoff des Basisbauteils den zweiten Kunststoff des Schutzelements zumindest teilweise aufschmilzt.

Weiter vorzugsweise ist die stoffschlüssige Verbindung des Schutzelements mit dem Basisbauteil durch eine Verklebung des Basisbauteils mit dem Schutzelement realisiert. Selbiges gilt bei Vorsehung einer oben beschriebenen Schutzplatte. Diese kann mit dem Basisbauteil verschweißt und/oder verklebt sein.

Vorzugsweise ist die Batteriegehäusekomponente derart ausgebildet, dass das Schutzelement faserverstärkt, vorzugsweise endlosfaserverstärkt ist, und/oder dass das Basisbauteil faserverstärkt, vorzugsweise kurzfaserverstärkt und/oder langfaserverstärkt ist.

Bei dem entsprechend ausgebildeten Basisbauteil ist das Fasermaterial in einem Matrixmaterial, welches durch den ersten Kunststoff gebildet ist, angeordnet. Das Fasermaterial weist vorzugsweise Glasfasern und/oder Armidfasern und/oder Karbonfasern auf.

Bei dem entsprechend ausgebildeten Schutzelement ist das Fasermaterial in einem Matrixmaterial, welches durch den zweiten Kunststoff gebildet ist, angeordnet. Das Fasermaterial weist vorzugsweise Glasfasern und/oder Armidfasern und/oder Karbonfasern auf.

Die entsprechend ausgebildete Batteriegehäusekomponente weist eine nochmals verbesserte mechanische Stabilität auf. Ferner weist die entsprechend ausgebildete Batteriegehäusekomponente eine verbesserte Schutzwirkung und eine verbesserte mechanische Stabilität bei thermischer Belastung auf. Denn bei einem faserverstärkten, insbesondere einem endlosfaserverstärktem Schutzelement behält dieses dessen mechanische Stabilität im Wesentlichen bei, wenn das Matrixmaterial (z.B**.** ein oben beschriebener thermoplastischer Kunststoff), in dem das Fasermaterial eingebettet ist, aufgrund von Wärmezufuhr aufweicht oder gar verflüssigt wird.

Das Fasermaterial des Schutzelements und/oder der Schutzplatte und/oder des Basisbauteils kann als Gewebestruktur ausgebildet sein. Ferner kann das Fasermaterial als Cross-Ply ausgebildet sein. Ferner kann das Fasermaterial mit unidirektional angeordneten Fasern mit unterschiedlichen Orientierungen ausgebildet sein.

Beim Basisbauteil beträgt der Gewichtsanteil des Fasermaterials vorzugsweise zwischen 5% und 70%, weiter vorzugsweise zwischen 10% und 65%, weiter vorzugsweise zwischen 20% und 60%, weiter vorzugsweise zwischen 30% und 50% und weiter vorzugsweise 45%. Beim Schutzelement und/oder bei der Schutzplatte beträgt der Gewichtsanteil des Fasermaterials vorzugsweise zwischen 5% und 80%, weiter vorzugsweise zwischen 10% und 75%, weiter vorzugsweise zwischen 20% und 70%, weiter vorzugsweise zwischen 30% und 60% und weiter vorzugsweise 60% oder 80%.

Das Schutzelement und/oder die Schutzplatte ist vorzugsweise als Organoblech oder als Cross-Ply ausgebildet.

Weiter vorzugsweise ist die Batteriegehäusekomponente derart ausgebildet, dass die Innenseite der Batteriegehäusekomponente, die durch den zweiten Bereich des Schutzelements gebildet ist, dazu ausgebildet ist, zumindest mittelbar mit einer Batteriezelle und/oder mit einem Batteriemodul zumindest mittelbar verbunden zu werden.

Die mittelbare Verbindung der Batteriezelle oder des Batteriemoduls mit der Innenseite der Batteriegehäusekomponente kann beispielsweise so realisiert sein, dass ein Kühlelement zwischen der Innenseite der Batteriegehäusekomponente und der Batteriezelle bzw. dem Batteriemodul angeordnet ist. Ferner kann zwischen dem Kühlelement und der Innenseite der Batteriegehäusekomponente eine Wärmeleitpaste angeordnet sein. Weiterhin kann zwischen den Kühlelement und den Batteriezellen und/oder den Batteriemodulen eine Wärmeleitpaste angeordnet sein.

Vorzugsweise ist die Batteriegehäusekomponente derart ausgebildet, dass das Basisbauteil Verstärkungselemente aufweist.

Die entsprechend ausgebildete Batteriegehäusekomponente weist eine nochmals verbesserte Steifigkeit auf, wobei das Gewicht der Batteriegehäusekomponente reduziert ist.

Die Verstärkungselemente können Verstärkungsrippen und/oder Verstärkungswaben aufweisen. Im Letzteren Fall weisen die Verstärkungselemente eine Wabenstruktur auf.

Die Verstärkungselemente sind vorzugsweise monolithisch mit dem Basisbauteil ausgebildet.

Weiter vorzugsweise ist die Batteriegehäusekomponente derart ausgebildet, dass die Verstärkungselemente an der Innenseite der Batteriegehäusekomponente und/oder an der Außenseite der Batteriegehäusekomponente ausgebildet sind.

Vorzugsweise ist die Batteriegehäusekomponente derart ausgebildet, dass die Batteriegehäusekomponente zumindest ein Befestigungselement aufweist, welches einstückig in dem Basisbauteil ausgebildet ist.

Eine entsprechend ausgebildete Batteriegehäusekomponente ermöglicht eine vereinfachte Befestigung von Batteriezellen und/oder Batteriemodulen mit der Batteriegehäusekomponente. Ferner ist eine Verbindung mit einer anderen Batteriegehäusekomponente, beispielsweise ein Batteriegehäusedeckel vereinfacht ermöglicht.

Vorzugsweise ist das zumindest eine Befestigungselement an der Innenseite der Batteriegehäusekomponente ausgebildet. Weiter vorzugsweise ist das zumindest eine Befestigungselement zwischen zwei einander benachbarten und einen ersten Bereich einfassenden zweiten Bereichen des Schutzelements angeordnet. Es ist jedoch auch möglich, dass das zumindest eine Befestigungselement an der Außenseite der Batteriegehäusekomponente ausgebildet ist.

Das zumindest eine Befestigungselement ist vorzugsweise als Buchse, vorzugsweise als Anschraubbuchse ausgebildet. Weiter vorzugsweise ist das zumindest eine Befestigungselement als Befestigungsstift und/oder als Zentrierstift ausgebildet. Der Befestigungsstift ist vorzugsweise zu dessen freien Ende hin konisch verjüngend ausgebildet.

Vorzugsweise ist die Batteriegehäusekomponente derart ausgebildet, dass die Batteriegehäusekomponente als Unterbodenschutz ausgebildet ist.

Vorzugsweise ist die Batteriegehäusekomponente derart ausgebildet, dass die Batteriegehäusekomponente als Batteriegehäuseschale ausgebildet ist und zumindest teilweise ein Aufnahmevolumen begrenzt, das zur Aufnahme von Batteriezellen und/oder Batteriemodulen ausgebildet ist.

Die Batteriegehäusekomponente kann vorzugsweise als Unterbodenschutz und als Batteriegehäuseschale ausgebildet sein. In diesem Fall dient die Batteriegehäuseschale ebenfalls als Unterbodenschutz.

Die Batteriegehäuseschale weist vorzugsweise eine umlaufende Begrenzungswand auf. Das Schutzelement erstreckt sich vorzugsweise in die Begrenzungswand hinein, so dass das Schutzelement an einer dem Aufnahmevolumen der Batteriegehäuseschale zugewandten Seite der Begrenzungswand angeordnet ist. Das Basisbauteil erstreckt sich vorzugsweise in die Begrenzungswand hinein, so dass das Basisbauteil an einer dem Aufnahmevolumen der Batteriegehäuseschale abgewandten Seite der Begrenzungswand angeordnet ist.

Die der vorliegenden Erfindung zugrundeliegende Aufgabe wird ferner durch ein Batteriegehäuse zur Aufnahme von Batteriezellen und/oder Batteriemodulen gelöst, wobei das Batteriegehäuse eine oben beschriebene Batteriegehäusekomponente aufweist.

Die der vorliegenden Erfindung zugrundeliegende Aufgabe wird ferner durch eine Traktionsbatterie für ein Kraftfahrzeug gelöst, die zumindest eine Batteriezelle und/oder zumindest ein Batteriemodul und ein oben beschriebenes Batteriegehäuse aufweist, wobei die zumindest eine Batteriezelle und/oder das zumindest eine Batteriemodul in dem Batteriegehäuse angeordnet ist/sind.

Ferner wird die der vorliegenden Erfindung zugrundeliegende Aufgabe durch ein Kraftfahrzeug, insbesondere Elektrokraftfahrzeug mit einer oben beschriebenen Traktionsbatterie gelöst.

Die der vorliegenden Erfindung zugrundeliegende Aufgabe wird ferner durch ein Verfahren zum Herstellen einer oben beschriebenen Batteriegehäusekomponente mittels Spritzgießen gelöst, wobei das Verfahren die folgenden Verfahrensschritte aufweist:
- Bereitstellen eines Spritzgießwerkzeugs mit einer ersten Spritzgießwerkzeughälfte und einer zweiten Spritzgießwerkzeughälfte;
- Bereitstellen eines einen zweiten Kunststoff aufweisendes Schutzelements, welches zumindest zwei Längsausnehmungen aufweist;
- Positionieren und Halten des Schutzelements zwischen den sich in einer Öffnungsstellung befindlichen ersten und zweiten Spritzgießwerkzeughälften;
- Schließen des Spritzgießwerkzeugs;
- Einspritzen eines ersten Kunststoffes, der das Basisbauteil bildet, in das sich im Schließstellung befindlichen Spritzgießwerkzeugs, so dass der erste Kunststoff das Schutzelement derart umfließt, dass zumindest eine Längsausnehmung des Schutzelements durch das Basisbauteil verschlossen ist;
- Öffnen des Spritzgießwerkzeugs und Entnehmen der Batteriegehäusekomponente.

Dieses erfindungsgemäße Verfahren weist den Vorteil auf, dass die Batteriegehäusekomponente werkzeugfallend herstellbar ist.

Vorzugsweise weist das Verfahren einen Verfahrensschritt des Umformens des Schutzelements auf, so dass ein erster Bereich des Schutzelements, der zwischen den zumindest zwei Längsausnehmungen angeordnet ist, bezüglich zumindest eines zweiten Bereichs höhenversetzt wird, so dass der erste Bereich des Schutzelements einen Teil einer Außenseite der zu fertigenden Batteriegehäusekomponente und der zweite Bereich des Schutzelements einen Teil einer Innenseite der Batteriegehäusekomponente bildet;

Vorzugsweise erfolgt das Umformen des Schutzelements, bei dem der erste Bereich des Schutzelements , der zwischen den zumindest zwei Längsausnehmungen angeordnet ist, bezüglich zumindest eines zweiten Bereichs höhenversetzt wird, so dass der erste Bereich des Schutzelements einen Teil einer Außenseite der zu fertigenden Batteriegehäusekomponente und der zweite Bereich des Schutzelements einen Teil einer Innenseite der Batteriegehäusekomponente bildet, während des Schließvorgangs des Spritzgießwerkzeugs. Diese Umformung erfolgt vorzugsweise mittels der Schließbewegung des Spritzgießwerkzeugs.

Vorzugsweise wird das Schutzelement vor dem Positionieren zwischen den Spritzgießwerkzeughälften vorgewärmt. Durch ein entsprechendes Verfahren wird ein Verschweißen des Schutzelements mit dem Basisbauteil verbessert ermöglicht.

Ferner wird die der vorliegenden Erfindung zugrundeliegende Aufgabe durch ein Verfahren zum Herstellen einer oben beschriebenen Batteriegehäusekomponente mittels Fließpressen gelöst, wobei das Verfahren die folgenden Verfahrensschritte aufweist:
- Bereitstellen eines Fließpresswerkzeugs mit einer Matrize und einem Stempel;
- Platzieren von zumindest einem Schutzelement, welches zumindest zwei Längsausnehmungen aufweist, und von zumindest einem einen ersten Kunststoff aufweisenden Plastifikat in der Matrize des sich in Offenstellung befindlichen Fließpresswerkzeugs;
- Schließen des Fließpresswerkzeugs und Umformen des Schutzelements derart, dass der Stempel des Fließpresswerkzeugs mit dem zumindest einen Plastifikat in Kontakt kommt und das Plastifikat durch Druckaufbringung mittels des Stempels derart umgeformt wird, dass das Plastifikat das Schutzelement derart umfließt, dass zumindest eine Längsausnehmung des Schutzelements durch das das Basisbauteil bildenden Plastifikats verschlossen ist; und
- Öffnen des Fließpresswerkzeugs und Entnehmen der Batteriegehäusekomponente.

Dieses erfindungsgemäße Verfahren weist den Vorteil auf, dass die Batteriegehäusekomponente werkzeugfallend herstellbar ist.

Vorzugsweise weist das Verfahren einen Verfahrensschritt des Umformens des Schutzelements auf, so dass ein erster Bereich des Schutzelements, der zwischen den zumindest zwei Längsausnehmungen angeordnet ist, bezüglich zumindest eines zweiten Bereichs höhenversetzt wird, so dass der erste Bereich des Schutzelements einen Teil einer Außenseite der zu fertigenden Batteriegehäusekomponente und der zweite Bereich des Schutzelements einen Teil einer Innenseite der Batteriegehäusekomponente bildet.

Vorzugsweise wird das Schutzelement vor dem Platzieren in der Matrize vorgewärmt. Durch ein entsprechendes Verfahren wird ein Verschweißen des Schutzelements mit dem Basisbauteil verbessert ermöglicht.

Weitere Vorteile, Einzelheiten und Merkmale der Erfindung ergeben sich nachfolgend aus den erläuterten Ausführungsbeispielen.

Dabei zeigen im Einzelnen:
- Figur 1:: eine perspektivische Darstellung einer erfindungsgemäßen Batteriegehäusekomponente gemäß einer ersten Ausführungsform der vorliegenden Erfindung;
- Figur 2:: eine perspektivische Darstellung einer erfindungsgemäßen Batteriegehäusekomponente gemäß einer zweiten Ausführungsform der vorliegenden Erfindung;
- Figur 3:: eine perspektivische Darstellung einer erfindungsgemäßen Batteriegehäusekomponente gemäß einer dritten Ausführungsform der vorliegenden Erfindung;
- Figur 4:: eine perspektivische Darstellung eines Schutzelements der in Figur 3 dargestellten Batteriegehäusekomponente in Alleinstellung;
- Figur 5A:: eine perspektivische Schnittdarstellung der erfindungsgemäßen Batteriegehäusekomponente gemäß der ersten, zweiten und dritten Ausführungsform der vorliegenden Erfindung;
- Figur 5B:: eine seitliche Schnittansicht der in Figur 5A dargestellten Batteriegehäusekomponente; und
- Figur 6:: eine perspektivische Schnittdarstellung einer Batteriegehäusekomponente gemäß einer vierten Ausführungsform der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

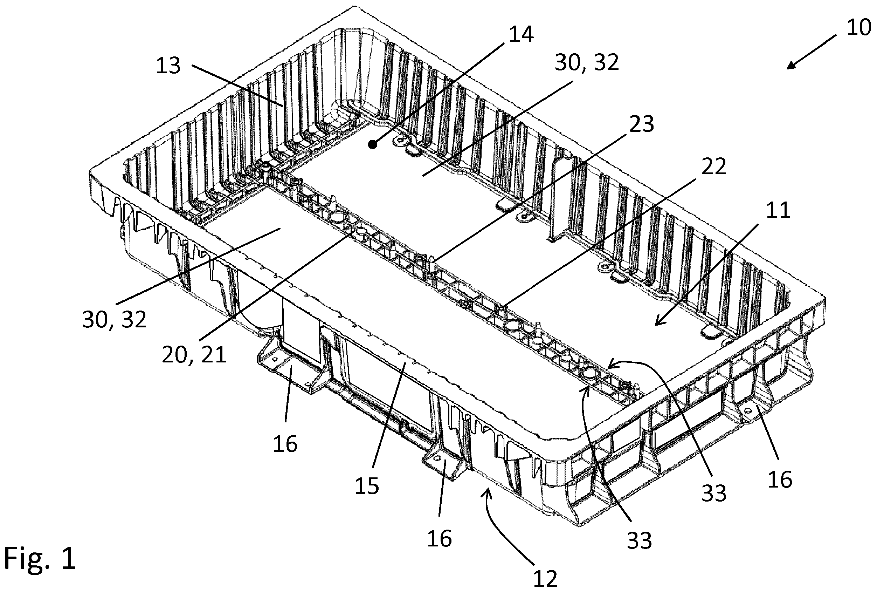

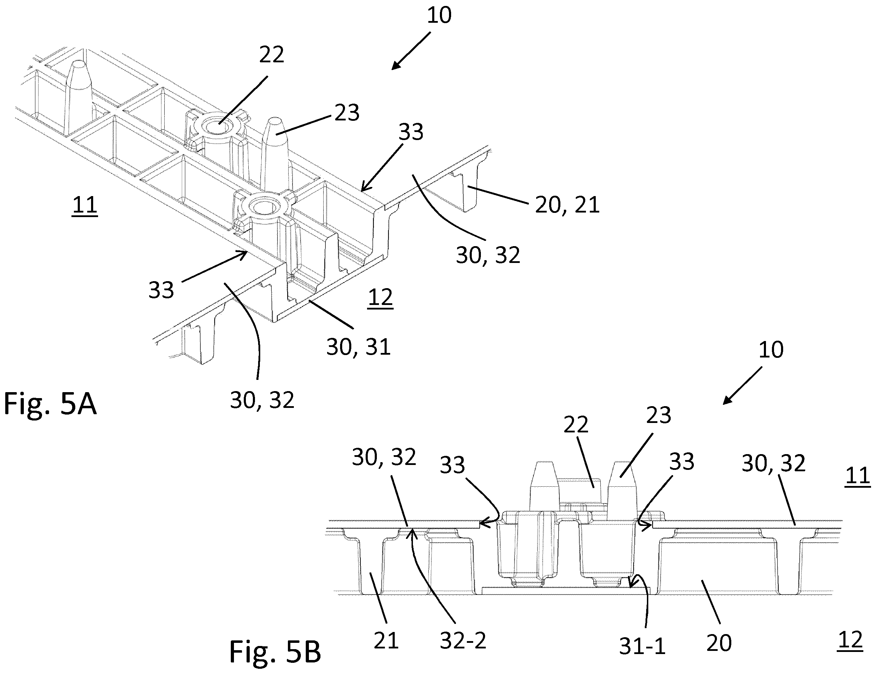

Figur 1 zeigt eine perspektivische Darstellung einer erfindungsgemäßen Batteriegehäusekomponente 10 gemäß einer ersten Ausführungsform der vorliegenden Erfindung. Die Batteriegehäusekomponente 10 ist in Figur 5A in perspektivischer Schnittdarstellung und in Figur 5B in seitlicher Schnittdarstellung dargestellt.

Die in Figur 1 dargestellte Batteriegehäusekomponente 10 ist als Batteriegehäuseschale 10 zur Aufnahme von in den Figuren nicht dargestellten Batteriezellen und/oder ebenfalls in den Figuren nicht dargestellten Batteriemodulen ausgebildet. Die Batteriezellen und/oder die Batteriemodule sind in einem Aufnahmevolumen 14 der Batteriegehäusekomponente 10 aufnehmbar, wobei das Aufnahmevolumen 14 teilweise von einer Innenseite 11 und einer umlaufenden Seitenwand 13 der Batteriegehäusekomponente 10 begrenzt ist. Die Batteriegehäusekomponente 10 weist einen randseitig angeordneten Verbindungsflansch 15 auf. Ferner weist die Batteriegehäusekomponente 10 eine Mehrzahl von Befestigungsstrukturen 16 auf, mittels der die Batteriegehäusekomponente 10 beispielsweise an einem Fahrzeug befestigt werden kann, oder mittels denen weitere Komponenten an der Batteriegehäusekomponente 10 befestigt werden können.

Die Batteriegehäusekomponente 10 weist ein Basisbauteil 20 auf, welches einen ersten Kunststoff aufweist. Das Basisbauteil, welches auch als Trägerbauteil 20 bezeichnet werden kann, ist in den dargestellten Ausführungsformen einstückig, im Genaueren monolithisch ausgebildet.

Die Batteriegehäusekomponente 10 weist ferner ein Schutzelement 30 auf, welches einen zweiten Kunststoff aufweist. Das Schutzelement 30, welches auch als Verstärkungselement 30 bezeichnet werden kann, ist einstückig, im Genaueren monolithisch ausgebildet. Das Schutzelement 30 weist zumindest zwei Längsausnehmungen 33 auf, wobei die Längsausnehmungen 33 jeweils das Schutzelement 30 durchragen. Ein erster Bereich 31 des Schutzelements 30, der zwischen den zwei Längsausnehmungen 33 angeordnet ist, ist bezüglich zweier zweiten Bereiche 32 derart höhenversetzt, dass der erste Bereich 31 des Schutzelements 30 einen Teil einer Außenseite 12 der Batteriegehäusekomponente 10 und die zweiten Bereiche 32 des Schutzelements 30 einen Teil der Innenseite 11 der Batteriegehäusekomponente 30 bilden. Das Schutzelement 30 ist mit dem Basisbauteil 20 derart verbunden, dass die Längsausnehmungen 33 des Schutzelements 30 durch das Basisbauteil 20 verschlossen sind.

Die Batteriegehäusekomponente 10 ist derart ausgebildet, dass in Draufsicht auf das Schutzelement 30, d.h. in einer Blickrichtung parallel zum Normalenvektor des zweiten Bereichs 32, das Schutzelement 30 durchgehend ausgebildet ist. Dies bedeutet, dass der erste Bereich 31 und die zweiten Bereiche 32 die Projektionsfläche der Batteriegehäusekomponente 10 komplett bedecken.

Die Batteriegehäusekomponente 10 weist eine Quasi-Sandwichbauweise auf. Dabei weisen der erste Bereich 31 des Schutzelements 30 und die diesen ersten Bereich 31 einfassenden zweiten Bereiche 32 des Schutzelements 30 unterschiedliche Höhenniveaus auf.

Der erste Bereich 31 und die diesen einfassenden zweiten Bereiche 32 des Schutzelements 30 sind Teil des einstückig ausgebildeten Schutzelements 30, und der erste Bereich 31 steht mittels des Basisbauteils 20 mit den diesen einfassenden zweiten Bereichen 32 in Kontakt.

Wie insbesondere aus den Figuren 5A und 5B ersichtlich ist, liegt das Basisbauteil 20 auf einer der Innenseite 11 der Batteriegehäusekomponente 10 zugewandten ersten Verbindungsfläche 31-1 des ersten Bereichs 31 des Schutzelements 30 auf. Ferner liegt das Basisbauteil 20 auf einer der Außenseite 12 der Batteriegehäusekomponente 10 zugewandten zweiten Verbindungsfläche 32-2 der zweiten Bereiche 32 des Schutzelements 30 auf.

In den dargestellten Ausführungsformen ist das Basisbauteil 20 mit der der Innenseite 11 der Batteriegehäusekomponente 10 zugewandten ersten Verbindungsfläche 31-1 des ersten Bereichs 31 stoffschlüssig verbunden. Ferner ist das Basisbauteil 20 mit der der Außenseite 12 der Batteriegehäusekomponente 10 zugewandten zweiten Verbindungsfläche 32-2 der zweiten Bereiche 32 des Schutzelements 30 stoffschlüssig verbunden.

Aus sämtlichen Figuren ist ferner ersichtlich, dass das Basisbauteil 20 Verstärkungselemente 21 aufweist. Die Verstärkungselemente 20 sind in Form von einander kreuzenden Verstärkungsrippen ausgebildet, die aufgrund ihrer Anordnung eine Wabenstruktur bilden. Die Verstärkungselemente 21 sind an der Innenseite 11 der Batteriegehäusekomponente 10 und an der Außenseite 12 der Batteriegehäusekomponente 10 ausgebildet.

Ferner ist aus sämtlichen Figuren ersichtlich, dass die Batteriegehäusekomponente 10 Befestigungselemente 22, 23 aufweist, welche einstückig in dem Basisbauteil 20 ausgebildet sind.

Die Befestigungselemente 22, 23 sind an der Innenseite 11 der Batteriegehäusekomponente 10 ausgebildet. Die Befestigungselemente 22, 23 sind zwischen zwei einander benachbarten und den ersten Bereich 31 einfassenden zweiten Bereichen 32 des Schutzelements 30 angeordnet.

Ein Teil der Befestigungselemente 22 ist als Buchse 22, vorzugsweise als Anschraubbuchse 22 ausgebildet. Ein anderer Teil der Befestigungselemente 23 ist jeweils als Befestigungsstift 23 bzw. als Zentrierstift ausgebildet. Die Befestigungsstifte sind zu deren freien Enden hin jeweils konisch verjüngend ausgebildet.

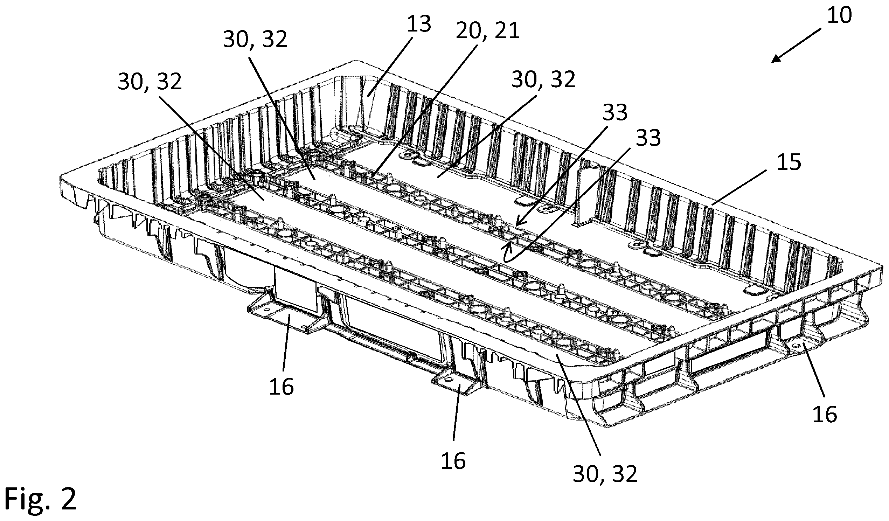

Figur 2 zeigt eine perspektivische Darstellung einer erfindungsgemäßen Batteriegehäusekomponente 10 gemäß einer zweiten Ausführungsform der vorliegenden Erfindung. Die Batteriegehäusekomponente 10 gemäß der zweiten Ausführungsform unterscheidet sich von der in Figur 1 dargestellten Batteriegehäusekomponente 10 lediglich dadurch, dass die Batteriegehäusekomponente 10 gemäß der zweiten Ausführungsform eine größere Ausdehnung aufweist und mehr erste Bereiche 31 und diese einfassende zweite Bereiche 32 aufweist.

Aus Figur 2 ist ersichtlich, dass die Batteriegehäusekomponente 10 derart ausgebildet, dass das Schutzelement 30 ein ganzzahliges Vielfaches von zwei Längsausnehmungen 33, also z.B. zwei oder vier oder sechs usw. Längsausnehmungen aufweist. In der dargestellten Ausführungsform weist das Schutzelement 30 sechs Längsausnehmungen 33 (entsprechend drei mal zwei Längsausnehmungen 33) auf. Zwischen jeweils zwei direkt benachbarten Längsausnehmungen 33 ist jeweils ein erster Bereich 31 des Schutzelements 30 gebildet, der von jeweils zwei zweiten Bereichen 32 begrenzt bzw. eingefasst ist, wobei jeder der ersten Bereiche 31 bezüglich der zwei zweiten Bereiche 32 höhenversetzt ist, so dass die jeweiligen ersten Bereiche 31 des Schutzelements 30 einen Teil der Außenseite 12 der Batteriegehäusekomponente 10 und die zweiten Bereiche 32 des Schutzelements 30 einen Teil der Innenseite 11 der Batteriegehäusekomponente 10 bilden.

Der übrige Aufbau der Batteriegehäusekomponente 10 gemäß der zweiten Ausführungsform ist identisch zum Aufbau der Batteriegehäusekomponente 10 gemäß der ersten Ausführungsform, so dass hinsichtlich des weiteren Aufbaus auf die obige Beschreibung der Batteriegehäusekomponente 10 gemäß der ersten Ausführungsform zwecks Vermeidung von Wiederholungen verwiesen wird.

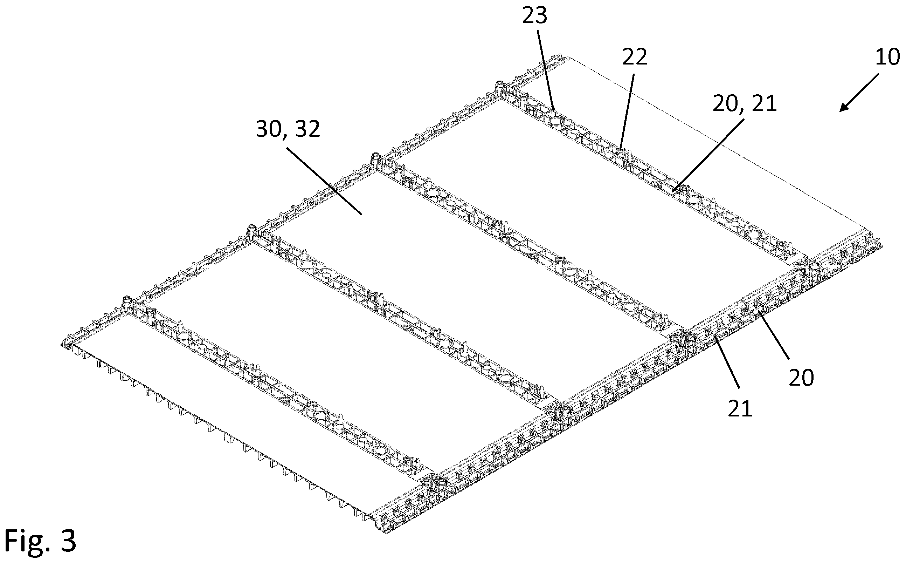

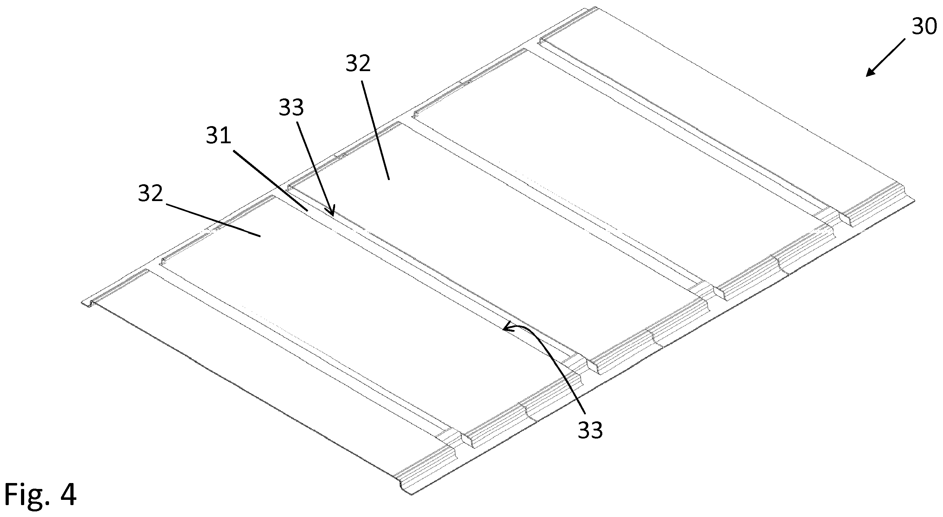

Figur 3 zeigt eine perspektivische Darstellung einer erfindungsgemäßen Batteriegehäusekomponente 10 gemäß einer dritten Ausführungsform der vorliegenden Erfindung. Figur 4 zeigt eine perspektivische Darstellung des Schutzelements 30 der in Figur 3 dargestellten Batteriegehäusekomponente 10 in Alleinstellung.

Die Batteriegehäusekomponente 10 gemäß der dritten Ausführungsform unterscheidet sich von der Batteriegehäusekomponente 10 gemäß der ersten und der zweiten Ausführungsform dadurch, dass die gemäß der dritten Ausführungsform keine umlaufende Seitenwand 13 aufweist. Die Batteriegehäusekomponente 10 gemäß der dritten Ausführungsform kann als Unterbodenschutz 10 verwendet werden.

Bei dem in Figur 4 in Alleinstellung dargestellten Schutzelement 30 ist die Stufenbauweise des Schutzelements 30 gut ersichtlich.

Der übrige Aufbau der Batteriegehäusekomponente 10 gemäß der dritten Ausführungsform ist identisch zum Aufbau der Batteriegehäusekomponente 10 gemäß der ersten Ausführungsform, so dass hinsichtlich des weiteren Aufbaus auf die obige Beschreibung der Batteriegehäusekomponente 10 gemäß der ersten Ausführungsform zwecks Vermeidung von Wiederholungen verwiesen wird.

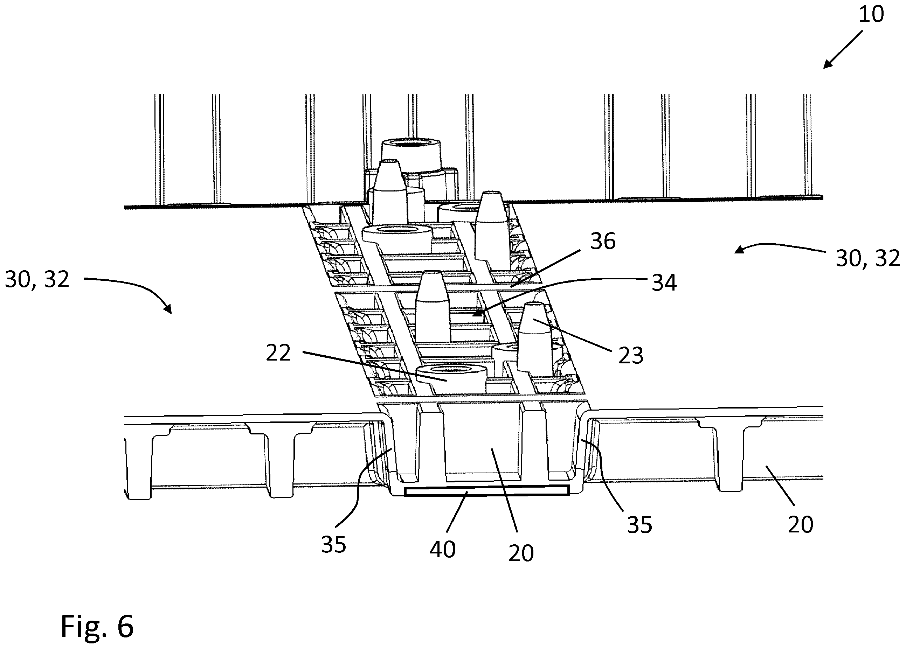

Figur 6 zeigt eine perspektivische Schnittdarstellung einer Batteriegehäusekomponente 10 gemäß einer vierten Ausführungsform der vorliegenden Erfindung.

Die Batteriegehäusekomponente 10 gemäß der vierten Ausführungsform weist ein Basisbauteil 20 auf, welches einen ersten Kunststoff aufweist. Die Batteriegehäusekomponente 10 weist ferner ein einstückig ausgebildetes Schutzelement 30 auf, welches einen zweiten Kunststoff aufweist. Das Schutzelement 30 weist zumindest eine Längsausnehmung 34 auf. Das Schutzelement 30 ist mit dem Basisbauteil 20 derart verbunden ist, dass die Längsausnehmung 34 des Schutzelements 30 durch das Basisbauteil 20 verschlossen ist. Dabei bildet das Schutzelement 30 einen Teil der Innenseite 11 der Batteriegehäusekomponente 10, und der Bereich des Basisbauteils 20, der die Längsausnehmung 35 des Schutzelements 30 versschließt, bildet den übrigen Teil der Innenseite 11 der Batteriegehäusekomponente 10.

Die in Figur 6 dargestellte Batteriegehäusekomponente 10 weist zumindest eine Schutzplatte 40 auf, welche den zweiten Kunststoff aufweist und auf der Außenseite 12 der Batteriegehäusekomponente 10 mit dem in der Längsausnehmung 34 angeordneten Basisbauteil 20 verbunden ist.

Wandabschnitte 35 des Schutzelements 30, die an der Längsausnehmung 34 angrenzen, sind in Richtung der Außenseite 12 der Batteriegehäusekomponente 10 gebogen ausgebildet. Einander gegenüberliegende und an die Längsausnehmung 34 angrenzende Bereiche des Schutzelements 30 sind durch Verbindungsstege 36 miteinander verbunden.

Der übrige Aufbau der Batteriegehäusekomponente 10 gemäß der vierten Ausführungsform ist identisch zum Aufbau der Batteriegehäusekomponente 10 gemäß der ersten Ausführungsform, so dass hinsichtlich des weiteren Aufbaus auf die obige Beschreibung der Batteriegehäusekomponente 10 gemäß der ersten Ausführungsform zwecks Vermeidung von Wiederholungen verwiesen wird.

### Bezugszeichenliste

- 10: Batteriegehäusekomponente
- 11: Innenseite (der Batteriegehäusekomponente)
- 12: Außenseite (der Batteriegehäusekomponente)
- 13: Seitenwand (der Batteriegehäusekomponente)
- 14: Aufnahmevolumen (der Batteriegehäusekomponente)
- 15: Verbindungsflansch (der Batteriegehäusekomponente)
- 16: Befestigungsstruktur
- 20: Basisbauteil (der Batteriegehäusekomponente)
- 21: Verstärkungselement (des Basisbauteils)
- 22: Befestigungselement / Anschraubbuchse (des Basisbauteils)
- 23: Befestigungselement / Befestigungsstift / Zentrierstift / Positionierungsstift (des Basisbauteils)
- 30: Schutzelement (der Batteriegehäusekomponente)
- 31: erster Bereich (des Schutzelements)
- 31-1: erste Verbindungsfläche (des ersten Bereichs)
- 32: zweiter Bereich (des Schutzelements)
- 32-2: zweite Verbindungsfläche (des zweiten Bereichs)
- 33: Längsausnehmung
- 34: Längsausnehmung
- 35: Wandabschnitt (des Schutzelements)
- 36: Verbindungssteg (des Schutzelements)
- 40: Schutzplatte

## Patentansprüche

1. Batteriegehäusekomponente (10) für eine Traktionsbatterie, wobei die Batteriegehäusekomponente (10) folgende Merkmale aufweist:
- die Batteriegehäusekomponente (10) weist ein Basisbauteil (20) auf, welches einen ersten Kunststoff aufweist;
- die Batteriegehäusekomponente (10) weist zumindest ein einstückig ausgebildetes Schutzelement (30) auf, welches einen zweiten Kunststoff aufweist;
- das Schutzelement (30) weist zumindest zwei Längsausnehmungen (33) auf;
- ein erster Bereich (31) des Schutzelements (30), der zwischen den zumindest zwei Längsausnehmungen (33) angeordnet ist, ist bezüglich zumindest eines zweiten Bereichs (32) derart höhenversetzt, dass der erste Bereich (31) des Schutzelements (30) einen Teil einer Außenseite (12) der Batteriegehäusekomponente (10) und der zweite Bereich (32) des Schutzelements (30) einen Teil einer Innenseite (11) der Batteriegehäusekomponente (10) bildet;
- das Schutzelement (30) ist mit dem Basisbauteil (20) derart verbunden, dass zumindest eine Längsausnehmung (33) des Schutzelements (30) durch das Basisbauteil (20) verschlossen ist.

2. Batteriegehäusekomponente (10) nach Anspruch 1, **dadurch gekennzeichnet, dass** das Basisbauteil (20)
- auf einer der Innenseite (11) der Batteriegehäusekomponente (10) zugewandten ersten Verbindungsfläche (31-1) des ersten Bereichs (31) des Schutzelements (30) und/oder
- auf einer der Außenseite (12) der Batteriegehäusekomponente (10) zugewandten zweiten Verbindungsfläche (32-2) des zumindest einen zweiten Bereichs (32) des Schutzelements (30)
aufliegt.

3. Batteriegehäusekomponente (10) für eine Traktionsbatterie, wobei die Batteriegehäusekomponente (10) folgende Merkmale aufweist:
- die Batteriegehäusekomponente (10) weist ein Basisbauteil (20) auf, welches einen ersten Kunststoff aufweist;
- die Batteriegehäusekomponente (10) weist zumindest ein einstückig ausgebildetes Schutzelement (30) auf, welches einen zweiten Kunststoff aufweist;
- das Schutzelement (30) weist zumindest eine Längsausnehmung (34) auf;
- das Schutzelement (30) ist mit dem Basisbauteil (20) derart verbunden,
- dass die Längsausnehmung (34) des Schutzelements (30) durch das Basisbauteil (20) verschlossen ist, und
- dass das Schutzelement (30) einen Teil einer Innenseite (11) der Batteriegehäusekomponente (10) bildet, und
- dass der Bereich des Basisbauteils (20), der die Längsausnehmung (34) des Schutzelements (30) versschließt, den übrigen Teil der Innenseite (11) der Batteriegehäusekomponente (10) bildet.

4. Batteriegehäusekomponente (10) nach einem der vorhergehenden Ansprüche, **dadurch gekennzeichnet, dass** das Schutzelement (30) mit dem Basisbauteil (20) stoffschlüssig verbunden ist.

5. Batteriegehäusekomponente (10) nach einem der vorhergehenden Ansprüche, **dadurch gekennzeichnet, dass** das Schutzelement (30) faserverstärkt, vorzugsweise endlosfaserverstärkt ist, und/oder dass das Basisbauteil (20) faserverstärkt, vorzugsweise kurzfaserverstärkt und/oder langfaserverstärkt ist.

6. Batteriegehäusekomponente (10) nach einem der Ansprüche 1, 2, 4 oder 5, **dadurch gekennzeichnet, dass** die Innenseite (11) der Batteriegehäusekomponente (10), die durch den zweiten Bereich (32) des Schutzelements (30) gebildet ist, dazu ausgebildet ist, zumindest mittelbar mit einer Batteriezelle und/oder mit einem Batteriemodul zumindest mittelbar verbunden zu werden.

7. Batteriegehäusekomponente (10) nach einem der vorhergehenden Ansprüche, **dadurch gekennzeichnet, dass** das Basisbauteil (20) Verstärkungselemente (21) aufweist.

8. Batteriegehäusekomponente (10) nach Anspruch 7, **dadurch gekennzeichnet, dass** die Verstärkungselemente (21) an der Innenseite (11) der Batteriegehäusekomponente (10) und/oder an der Außenseite (12) der Batteriegehäusekomponente (10) ausgebildet sind.

9. Batteriegehäusekomponente (10) nach einem der vorhergehenden Ansprüche, **dadurch gekennzeichnet, dass** die Batteriegehäusekomponente (10) zumindest ein Befestigungselement (22, 23) aufweist, welches einstückig in dem Basisbauteil (20) ausgebildet ist.

10. Batteriegehäusekomponente (10) nach einem der vorhergehenden Ansprüche, **dadurch gekennzeichnet, dass** die Batteriegehäusekomponente (10) als Unterbodenschutz (10) ausgebildet ist.

11. Batteriegehäusekomponente (10) nach einem der vorhergehenden Ansprüche, **dadurch gekennzeichnet, dass** die Batteriegehäusekomponente (10) als Batteriegehäuseschale (10) ausgebildet ist und zumindest teilweise ein Aufnahmevolumen (14) begrenzt, das zur Aufnahme von Batteriezellen und/oder Batteriemodulen ausgebildet ist.

12. Batteriegehäuse zur Aufnahme von Batteriezellen und/oder Batteriemodulen, aufweisend eine Batteriegehäusekomponente (10) nach einem der vorhergehenden Ansprüche.

13. Traktionsbatterie für ein Kraftfahrzeug, aufweisend zumindest eine Batteriezelle und/oder zumindest ein Batteriemodul und ein Batteriegehäuse nach Anspruch 12, wobei die zumindest eine Batteriezelle und/oder das zumindest eine Batteriemodul in dem Batteriegehäuse angeordnet ist/sind.

14. Kraftfahrzeug, insbesondere Elektrokraftfahrzeug mit einer Traktionsbatterie nach Anspruch 13.

15. Verfahren zum Herstellen einer Batteriegehäusekomponente (10) nach einem der Ansprüche 1, 2 oder 4 bis 11 mittels Spritzgießen, die folgenden Verfahrensschritte aufweisend:
- Bereitstellen eines Spritzgießwerkzeugs mit einer ersten Spritzgießwerkzeughälfte und einer zweiten Spritzgießwerkzeughälfte;
- Bereitstellen eines einen zweiten Kunststoff aufweisendes Schutzelements (30), welches zumindest zwei Längsausnehmungen (33) aufweist;
- Positionieren und Halten des Schutzelements (30) zwischen den sich in einer Öffnungsstellung befindlichen ersten und zweiten Spritzgießwerkzeughälften;
- Schließen des Spritzgießwerkzeugs;
- Einspritzen eines ersten Kunststoffes, der das Basisbauteil (20) bildet, in das sich im Schließstellung befindlichen Spritzgießwerkzeugs, so dass der erste Kunststoff das Schutzelement (30) derart umfließt, dass zumindest eine Längsausnehmung (33) des Schutzelements (30) durch das Basisbauteil (20) verschlossen ist;
- Öffnen des Spritzgießwerkzeugs und Entnehmen der Batteriegehäusekomponente (10).

16. Verfahren zum Herstellen einer Batteriegehäusekomponente (10) nach einem der Ansprüche 1, 2 oder 4 bis 11 mittels Fließpressen, die folgenden Verfahrensschritte aufweisend:
- Bereitstellen eines Fließpresswerkzeugs mit einer Matrize und einem Stempel;
- Platzieren von zumindest einem Schutzelement (30), welches zumindest zwei Längsausnehmungen (33) aufweist, und von zumindest einem einen ersten Kunststoff aufweisenden Plastifikat in der Matrize des sich in Offenstellung befindlichen Fließpresswerkzeugs;
- Schließen des Fließpresswerkzeugs derart, dass der Stempel des Fließpresswerkzeugs mit dem zumindest einen Plastifikat in Kontakt kommt und das Plastifikat durch Druckaufbringung mittels des Stempels derart umgeformt wird, dass das Plastifikat das Schutzelement (30) derart umfließt, dass zumindest eine Längsausnehmung (33) des Schutzelements (30) durch das das Basisbauteil (20) bildenden Plastifikats verschlossen ist; und
- Öffnen des Fließpresswerkzeugs und Entnehmen der Batteriegehäusekomponente (10).

## Claims

1. Battery housing component (10) for a traction battery, wherein the battery housing component (10) has the following features:
- the battery housing component (10) has a base component (20) comprising a first plastics material;
- the battery housing component (10) has at least one integrally formed protective element (30) comprising a second plastics material;
- the protective element (30) has at least two longitudinal recesses (33);
- a first region (31) of the protective element (30), which is arranged between the at least two longitudinal recesses (33), is offset in height with respect to at least one second region (32) such that the first region (31) of the protective element (30) forms part of an outer side (12) of the battery housing component (10) and the second region (32) of the protective element (30) forms part of an inner side (11) of the battery housing component (10);
- the protective element (30) is connected to the base component (20) such that at least one longitudinal recess (33) of the protective element (30) is sealed by the base component (20).

2. Battery housing component (10) according to claim 1, **characterized in that** the base component (20)
- lies on a first connecting surface (31-1) of the first region (31) of the protective element (30) which faces the inner side (11) of the battery housing component (10) and/or
- lies on a second connecting surface (32-2) of the at least one second region (32) of the protective element (30) which faces the outer side (12) of the battery housing component (10).

3. Battery housing component (10) for a traction battery, wherein the battery housing component (10) has the following features:
- the battery housing component (10) has a base component (20) comprising a first plastics material;
- the battery housing component (10) has at least one integrally formed protective element (30) comprising a second plastics material;
- the protective element (30) has at least one longitudinal recess (34);
- the protective element (30) is connected to the base component (20) such that
- the longitudinal recess (34) of the protective element (30) is sealed by the base component (20), and
- the protective element (30) forms part of an inner side (11) of the battery housing component (10), and
- the region of the base component (20) which seals the longitudinal recess (34) of the protective element (30) forms the remaining part of the inner side (11) of the battery housing component (10).

4. Battery housing component (10) according to any of the preceding claims,
**characterized in that** the protective element (30) is integrally bonded to the base component (20).

5. Battery housing component (10) according to any of the preceding claims,
**characterized in that** the protective element (30) is fiber-reinforced, preferably reinforced with continuous fibers, and/or **in that** the base component (20) is fiber-reinforced, preferably reinforced with short fibers and/or reinforced with long fibers.

6. Battery housing component (10) according to any of claims 1, 2, 4 or 5,
**characterized in that** the inner side (11) of the battery housing component (10), which is formed by the second region (32) of the protective element (30), is designed to be at least indirectly connected to a battery cell and/or to a battery module.

7. Battery housing component (10) according to any of the preceding claims,
**characterized in that** the base component (20) has reinforcing elements (21).

8. Battery housing component (10) according to claim 7,
**characterized in that** the reinforcing elements (21) are formed on the inner side (11) of the battery housing component (10) and/or on the outer side (12) of the battery housing component (10).

9. Battery housing component (10) according to any of the preceding claims,
**characterized in that** the battery housing component (10) has at least one fastening element (22, 23) which is formed integrally in the base component (20).

10. Battery housing component (10) according to any of the preceding claims,
**characterized in that** the battery housing component (10) is designed as an underbody protection means (10).

11. Battery housing component (10) according to any of the preceding claims,
**characterized in that** the battery housing component (10) is formed as a battery housing shell (10) and at least partially delimits a receiving volume (14) which is designed to receive battery cells and/or battery modules.

12. Battery housing for receiving battery cells and/or battery modules, comprising a battery housing component (10) according to any of the preceding claims.

13. Traction battery for a motor vehicle, having at least one battery cell and/or at least one battery module and a battery housing according to claim 12, wherein the at least one battery cell and/or the at least one battery module is/are arranged in the battery housing.

14. Motor vehicle, in particular an electric motor vehicle comprising a traction battery according to claim 13.

15. Method for producing a battery housing component (10) according to any of claims 1, 2 or 4 to 11 by injection molding, comprising the following method steps:
- providing an injection mold having a first injection mold half and a second injection mold half;
- providing a protective element (30) which has at least two longitudinal recesses (33) and comprises a second plastics material;
- positioning and holding the protective element (30) between the first and second injection mold halves which are in an open position;
- closing the injection mold;
- injecting a first plastics material, which forms the base component (20), into the injection mold which is in the closed position so that the first plastics material flows around the protective element (30) such that at least one longitudinal recess (33) of the protective element (30) is sealed by the base component (20);
- opening the injection mold and removing the battery housing component (10).

16. Method for producing a battery housing component (10) according to any of claims 1, 2 or 4 to 11 by extrusion, comprising the following method steps:
- providing an extrusion tool comprising a die and a punch;
- placing at least one protective element (30), which has at least two longitudinal recesses (33), and at least one plasticized melt comprising a first plastics material in the die of the extrusion tool which is in the open position;
- closing the extrusion tool such that the punch of the extrusion tool comes into contact with the at least one plasticized melt and the plasticized melt is deformed by applying pressure by means of the punch such that the plasticized melt flows around the protective element (30) such that at least one longitudinal recess (33) of the protective element (30) is sealed by the plasticized melt which forms the base component (20); and
- opening the extrusion tool and removing the battery housing component (10).

## Revendications

1. Composant de boîtier de batterie (10) pour une batterie de traction, dans lequel le composant de boîtier de batterie (10) présente les caractéristiques suivantes :
- le composant de boîtier de batterie (10) présente une pièce formant base (20) qui présente une première matière plastique ;
- le composant de boîtier de batterie (10) présente au moins un élément de protection (30) réalisé d'une seule pièce qui présente une seconde matière plastique ;
- l'élément de protection (30) présente au moins deux évidements longitudinaux (33) ;
- une première zone (31) de l'élément de protection (30), laquelle est disposée entre les au moins deux évidements longitudinaux (33), est décalée en hauteur par rapport à au moins une seconde zone (32), de telle sorte que la première zone (31) de l'élément de protection (30) forme une partie d'un côté extérieur (12) du composant de boîtier de batterie (10) et la seconde zone (32) de l'élément de protection (30) forme une partie d'un côté intérieur (11) du composant de boîtier de batterie (10) ;
- l'élément de protection (30) est relié à la pièce formant base (20) de telle sorte qu'au moins un évidement longitudinal (33) de l'élément de protection (30) est obturé par la pièce formant base (20).

2. Composant de boîtier de batterie (10) selon la revendication 1,
**caractérisé en ce que** la pièce formant base (20) repose
- sur une première surface de liaison (31-1), tournée vers le côté intérieur (11) du composant de boîtier de batterie (10), de la première zone (31) de l'élément de protection (30) et/ou
- sur une seconde surface de liaison (32-2), tournée vers le côté extérieur (12) du composant de boîtier de batterie (10), de l'au moins une seconde zone (32) de l'élément de protection (30).

3. Composant de boîtier de batterie (10) pour une batterie de traction, dans lequel le composant de boîtier de batterie (10) présente les caractéristiques suivantes :
- le composant de boîtier de batterie (10) présente une pièce formant base (20) qui présente une première matière plastique ;
- le composant de boîtier de batterie (10) présente au moins un élément de protection (30) réalisé d'une seule pièce qui présente une seconde matière plastique ;
- l'élément de protection (30) présente au moins un évidement longitudinal (34) ;
- l'élément de protection (30) est relié à la pièce formant base (20) de telle sorte que
- l'évidement longitudinal (34) de l'élément de protection (30) est obturé par la pièce formant base (20), et
- l'élément de protection (30) forme une partie d'un côté intérieur (11) du composant de boîtier de batterie (10), et
- la zone de la pièce formant base (20) qui obture l'évidement longitudinal (34) de l'élément de protection (30) forme la partie restante du côté intérieur (11) du composant de boîtier de batterie (10).

4. Composant de boîtier de batterie (10) selon l'une des revendications précédentes, **caractérisé en ce que** l'élément de protection (30) est relié à la pièce formant base (20) par liaison de matière.

5. Composant de boîtier de batterie (10) selon l'une des revendications précédentes, **caractérisé en ce que** l'élément de protection (30) est renforcé de fibres, de préférence de fibres continues, **et/ou en ce que** la pièce formant base (20) est renforcée de fibres, de préférence de fibres courtes et/ou de fibres longues.

6. Composant de boîtier de batterie (10) selon l'une des revendications 1, 2, 4 ou 5, **caractérisé en ce que** le côté intérieur (11) du composant de boîtier de batterie (10) formé par la seconde zone (32) de l'élément de protection (30) est réalisé pour être relié au moins indirectement à un élément de batterie et/ou au moins indirectement à un module de batterie.

7. Composant de boîtier de batterie (10) selon l'une des revendications précédentes, **caractérisé en ce que** la pièce formant base (20) présente des éléments de renforcement (21).

8. Composant de boîtier de batterie (10) selon la revendication 7,
**caractérisé en ce que** les éléments de renforcement (21) sont réalisés sur le côté intérieur (11) du composant de boîtier de batterie (10) et/ou sur le côté extérieur (12) du composant de boîtier de batterie (10).

9. Composant de boîtier de batterie (10) selon l'une des revendications précédentes, **caractérisé en ce que** le composant de boîtier de batterie (10) présente au moins un élément de fixation (22, 23) qui est réalisé d'un seul tenant dans la pièce formant base (20).

10. Composant de boîtier de batterie (10) selon l'une des revendications précédentes, **caractérisé en ce que** le composant de boîtier de batterie (10) est réalisé en tant que moyen de protection de fond (10).

11. Composant de boîtier de batterie (10) selon l'une des revendications précédentes, **caractérisé en ce que** le composant de boîtier de batterie (10) est réalisé en tant que coque de boîtier de batterie (10) et délimite au moins partiellement un volume de réception (14) qui est réalisé pour recevoir des éléments de batterie et/ou des modules de batterie.

12. Boîtier de batterie destiné à recevoir des éléments de batterie et/ou des modules de batterie, présentant un composant de boîtier de batterie (10) selon l'une des revendications précédentes.

13. Batterie de traction pour un véhicule automobile, présentant au moins un élément de batterie et/ou au moins un module de batterie et un boîtier de batterie selon la revendication 12, dans laquelle l'au moins un élément de batterie et/ou l'au moins un module de batterie sont disposés dans le boîtier de batterie.

14. Véhicule automobile, en particulier véhicule automobile électrique, comportant une batterie de traction selon la revendication 13.

15. Procédé pour la fabrication d'un composant de boîtier de batterie (10) selon l'une des revendications 1, 2 ou 4 à 11 par moulage par injection, présentant les étapes de procédé suivantes :
- fourniture d'un outil de moulage par injection comportant une première moitié d'outil de moulage par injection et une seconde moitié d'outil de moulage par injection ;
- fourniture d'un élément de protection (30) présentant une seconde matière plastique, lequel présente au moins deux évidements longitudinaux (33) ;
- positionnement et maintien de l'élément de protection (30) entre les première et seconde moitiés d'outil de moulage par injection se trouvant dans une position d'ouverture ;
- fermeture de l'outil de moulage par injection ;
- injection d'une première matière plastique, laquelle forme la pièce formant base (20), dans l'outil de moulage par injection se trouvant dans la position fermée, de sorte que la première matière plastique s'écoule autour de l'élément de protection (30) de telle sorte qu'au moins un évidement longitudinal (33) de l'élément de protection (30) est obturé par la pièce formant base (20) ;
- ouverture de l'outil de moulage par injection et retrait du composant de boîtier de batterie (10).

16. Procédé pour la fabrication d'un composant de boîtier de batterie (10) selon l'une des revendications 1, 2 ou 4 à 11 par extrusion, présentant les étapes de procédé suivantes :
- fourniture d'un outil d'extrusion comportant une matrice et un poinçon ;
- placement d'au moins un élément de protection (30), lequel présente au moins deux évidements longitudinaux (33), et d'au moins un cordon de matière plastique présentant une première matière plastique dans la matrice de l'outil d'extrusion se trouvant dans la position ouverte ;
- fermeture de l'outil d'extrusion de telle sorte que le poinçon de l'outil d'extrusion entre en contact avec l'au moins un cordon de matière plastique et le cordon de matière plastique est déformé par application de pression au moyen du poinçon, de telle sorte que le cordon de matière plastique s'écoule autour de l'élément de protection (30) de telle sorte qu'au moins un évidement longitudinal (33) de l'élément de protection (30) est obturé par le cordon de matière plastique formant la pièce formant base (20) ; et
- ouverture de l'outil d'extrusion et retrait du composant de boîtier de batterie (10).
